(19)

Europäisches
Patentamt
European
Patent Office
Office européen
des brevets

(11) **EP 4 671 846 A1**

(12) **EUROPEAN PATENT APPLICATION**

(43) Date of publication:
**31.12.2025  Bulletin 2026/01**

(21) Application number: **24185575.8**

(22) Date of filing: **29.06.2024**

(51) International Patent Classification (IPC):
*G02B 21/36* (2006.01)     *G06T 5/50* (2006.01)
*G02B 21/00* (2006.01)     *G02B 27/14* (2006.01)

(52) Cooperative Patent Classification (CPC):
**G02B 21/367; G02B 21/0012; G06T 11/00;**
G02B 27/141

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Leica Instruments (Singapore) Pte.
Ltd.
Singapore 618299 (SG)**

(72) Inventors:
• ZHANG, Lei
618299 Singapore (SG)
• ANG, Yan Eng
618299 Singapore (SG)
• Khoo, Giap Hong Tom
618299 Singapore (SG)

(74) Representative: **2SPL Patentanwälte PartG mbB
Landaubogen 3
81373 München (DE)**

(54) **A METHOD AND AN APPARATUS FOR GENERATING AN IMAGE FOR A MICROSCOPE AND A MICROSCOPY SYSTEM**

(57)     A method for generating an image (100) for a microscope, comprises receiving (102) a first image (210) and receiving (104) a second image (220). The method further comprises generating (106) a processed second image (240, 214) based on the second image (220) and generating the image (204) using the first image (210) and the processed second image (240, 214).

```
┌─────────────────────────────────┐
│                                 │
│     receive a first image       │ ～ 102
│                                 │
└─────────────────────────────────┘
┌─────────────────────────────────┐
│                                 │
│     receive a second image      │ ～ 104
│                                 │
└─────────────────────────────────┘
┌─────────────────────────────────┐
│                                 │
│     generate a processed        │ ～ 106
│       second image              │
└─────────────────────────────────┘
┌─────────────────────────────────┐
│  Generating the image using the first │
│   image and the processed       │ ～ 108
│       second image              │
└─────────────────────────────────┘
```

Fig.1

**EP 4 671 846 A1**

## Description

### Field

The present disclosure relates to a method for generating an image for a microscope that is based on at least two input images and to the generation of the input images.

### Background

Using a microscope in surgery, also known as microsurgery, enables surgeons to perform intricate procedures with enhanced precision. Surgical microscopes may provide high levels of magnification, allowing surgeons to see fine details of tissues and structures that are otherwise not visible to the naked eye. Enhanced lighting and optics can provide better visualization of the surgical field, which is critical for delicate procedures. Images captured through surgical microscopes can be further processed to highlight regions of interest or specific tissue structures. This process involves various image processing techniques, which can enhance the visibility and differentiation of anatomical features, aiding in surgical precision.

Image processing techniques that may be involved are, for example, contrast enhancement such as for example histogram equalization or adaptive contrast enhancement. Histogram equalization adjusts the contrast of the image by redistributing the intensity values. Adaptive contrast enhancement improves contrast locally within different regions of the image. Color mapping may exhibit pseudo-coloring or false coloring. Pseudo-coloring assigns different colors to different intensity levels to highlight specific structures. False coloring uses color to enhance contrast and visualize different tissue types. Edge detection algorithms detect the edges of structures within the image, helping to outline regions of interest. Segmentation identifies different objects in the image and may, for example, be performed using thresholding, region growing or watershed algorithms. Thresholding separates objects from the background by setting a specific intensity threshold. Region growing groups pixels or sub-regions into larger regions based on predefined criteria. Watershed algorithms segment the image based on the topology of the intensity surface. Machine Learning and Artificial Intelligence (AI) may be used, too. Deep learning models (e.g. convolutional neural networks, CNN) may be utilized to automatically detect and highlight regions of interest. Image Classification (classifier networks) may be used to identify different tissue types based on training data and to label them within an image. The computational complexity of these image processing methods varies, but many can be resource-intensive, for example those involving advanced techniques like machine learning.

When using image analysis methods and deep learning models in surgical settings, the performance and reliability of these methods or models are critical. In surgical settings, high latency of the output can lead to delays in decision-making, which may compromise the procedure's success. High latencies may even make real time applications infeasible. A deep learning model may, for example, also fail to provide accurate results, leading to incorrect analysis. The system might become unresponsive, requiring a reset or intervention from technical staff. Such a scenario may even occur during a surgery after the system operated reliably for an extended period.

Hence, there is a demand for an enhanced method for generating an image for a microscope.

### Summary

Said demand is addressed by the subject matter of the independent claims.

An embodiment relates to a method for generating an image for a microscope, the method at least comprising receiving a first image and receiving a second image. The method further comprises generating a processed second image based on the second image and generating the image using the first image and the processed second image. Processing a second image and combining the processed second image with an unprocessed first image received in parallel to the second image may allow to perform complicated processing on the second image. It can simultaneously be assured that an image from a microscope can also be provided if an image processing pipeline processing the second image fails by any means since then the first image is still available.

For example, one may use AI to extract specific features (e.g., tumor margins) from the second image, which can then be overlaid or combined with the first image to provide a comprehensive view during a surgery. As compared to a single image processing pipeline, the surgeon would be able to complete surgery if the extraction of features fails entirely or creates obscured results by using the first image. In this event, the generation of the image might disregard the processed second image.

An embodiment may include determining a reliability criterion for the processed second image and combining the processed second image and the first image to generate the image if the reliability criterion fulfills a determined condition. This may serve to avoid the generation of images having a contribution of the processed second image if the associated image processing is by some means unreliable.

For example, the method may, therefore, comprise generating the image based on only the first image, if the reliability criterion does not fulfil the determined condition.

In an embodiment, the image is generated such that an area of interest identified in the processed second image is accentuated with in the image. Accentuating the Area Of Interest (AOI) may include color highlighting. Color highlighting changes the color of the AOI to make it stand out (e.g., converting the area to a different color or using a pseudocolor map). Accentuating the area of interest may further include brightness/contrast adjustment, increasing the brightness or contrast of the AOI relative to the rest of the image. Border Highlighting may draw a border around the AOI. Blurring Surrounding Areas outside the AOI may serve to focus attention on the AOI. Accentuating areas of interest may make critical features more visible and quickly identify and focus on important regions within a complex image, reducing the time needed to locate areas of interest.

In an embodiment, the second image may be down- sampled before being processed. Down-sampling may reduce the number of pixels to process, speeding up image analysis and enabling quicker identification of areas of interest in large images. Furthermore, memory and processing power requirements may be reduced, which is useful for systems with limited resources.

In an embodiment, the second image or the down-sampled second image are processed using a trained neural network to generate the processed second image or a down-sampled representation of the processed second image. Neural networks, for example convolutional neural networks, are effective at detecting and classifying intricate patterns and features in images that traditional methods might miss. Automated processing with neural networks may minimize the risk of human error in identifying areas of interest.

In an embodiment, the neural network is trained to determine at least one item of the group consisting of an area of interest within the processed second image, an anomaly, and a recommendation. Neural networks can be trained to detect anomalies by learning the patterns of normal data and identifying deviations from these patterns. The neural network may be trained to learn from patient history and recommend further tests or treatments.

In an embodiment, the first image is associated to a first wavelength range and the second image is associated to a different second wavelength range. Using different wavelength ranges in microscopy can offer several advantages, for example when combined with neural networks for image processing. Different wavelengths interact with materials in various ways, highlighting different properties and structures within the sample. For example, ultraviolet (UV) light can reveal fine surface details, while infrared (IR) light can penetrate deeper into the sample. The use of different wavelength may enhance contrast and make certain features more visible, which might not be as apparent under standard visible light microscopy. For example, fluorescence microscopy may use specific wavelengths to excite fluorescent dyes or markers that bind to specific structures or molecules within the specimen. This may be used in biological and medical imaging to highlight specific cells or proteins. Such selective imaging allows for selective imaging of components within a sample, providing more targeted and relevant data.

According to some embodiments, a representation of the first image may be processed using a further trained neural network, allowing to also increase the quality of the first image.

Further optionally, the image is generated further using the processed representation of the first image. Such processing may further allow to perform image processing of the first image to, for example, increase its quality, while still maintaining the possibility to use the unprocessed image if processing of the first image fails or becomes too slow for the desired application.

An embodiment of an apparatus for generating an image for a microscope comprises an input interface configured to receive a first image and a second image and processing circuitry. The processing circuitry is configured to generate a processed second image based on the second image and to generate the image using the first image and the processed second image. Processing a second image and combining the processed second image with an unprocessed first image received in parallel to the second image may allow to perform complicated processing on the second image, simultaneously assuring that an image from a microscope can also be provided if an image processing pipeline processing the second image fails by any means. The decoupling of the pipelines assures that the first image is still available.

According to some embodiments, the processing circuitry comprises application specific circuitry configured to generate the image using the first image and the processed second image and a graphics processing unit configured to contribute to the generation of the processed second image. Application-specific circuitry is custom-designed electronic circuits tailored for a particular application or function. Application-specific circuitry is designed to meet the unique requirements of specific applications, eventually leading to improved performance, reduced power consumption, and optimized functionality. These custom circuits can ensure reliability, efficiency, and effectiveness of the devices and systems in which they are used. A Graphics Processing Unit (GPU) is a specialized processor designed to accelerate the rendering of images, videos, and animations for display on a computer screen. Beyond graphics, GPUs are also used for parallel processing tasks in various fields due to their ability to handle multiple operations simultaneously. For example, in Machine Learning and Artificial Intelligence, they are also used during inference where trained models make predictions on new data. Performing the image processing on a graphics processing unit while using application specific circuitry to generate the first image and the processed second image may assure both, high reliability and speed of the whole circuit provided by the Application-specific circuitry and flexibility and speed for various image processing pipelines or models using the GPU.

An embodiment of a microscopy system comprises a microscope configured to take a first image corresponding to a first wavelength range and a second image corresponding to a second wavelength range and an embodiment of an apparatus for generating an image for a microscope. Using different wavelength ranges in microscopy can provide the additionaly capabilities and advantages as elaborated on above.

According to some embodiments, the microscope comprises a lens system along a main optical axis to image a specimen and a beam splitter in the main optical axis of the microscope to separate the first wavelength range from the second wavelength range. The beam splitter comprises a front face, a back face and a beam splitting element between the front face and the back face. The beam splitting element directs a part of the incident light intensity into the direction of a secondary optical axis different than the main optical axis. The front face comprises a wavelength sensitive coating, the coating having a transmission characteristic blocking the second wavelength range. Combining the beams splitting function and the separation of wavelength may result in a compact device.

According to some embodiments, the wavelength sensitive coating has an opening around the main optical axis. This may result in a portion of the spectrum to enter into the beam splitting element without attenuation to split the incident light or radiation into different spectral components.

According to some embodiments, the wavelength sensitive coating is also applied on the back face of the beam splitting element. This may result in a better separation of the spectral components.

According to some embodiments, the microscope further comprises a first imaging sensor sensitive to the first wavelength range along the main optical axis and a second imaging sensor sensitive to the second wavelength range along the secondary optical axis, enabling to generate images of differing spectral content within the microscope itself.

### Brief description of the Figures

Some examples of apparatuses and/or methods will be described in the following by way of example only, and with reference to the accompanying figures, in which

Fig. 1 illustrates a flowchart of an embodiment of a method for generating an image for a microscope;

Fig. 2 schematically illustrates am embodiment of an apparatus for generating an image for a microscope;

Fig. 3 illustrates an example for an optical assembly to determine images usable for the method of fig. 1 or the apparatus of fig 2; and

Fig. 4 schematically illustrates an example for a system to generate an image.

### Detailed Description

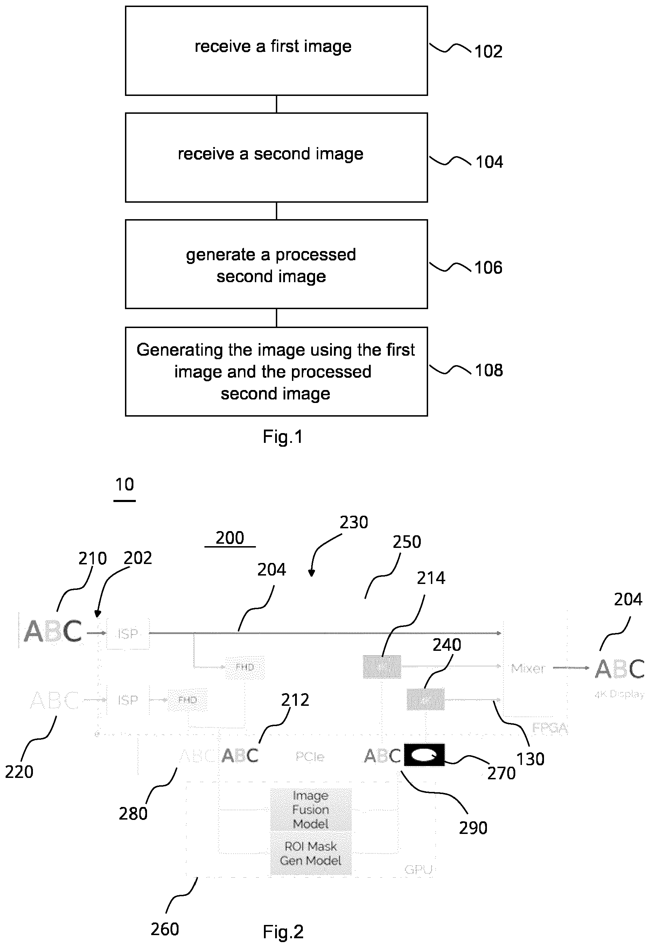

Fig. 1 illustrates a flowchart of an embodiment of a method for generating an image for a microscope and fig. 2 schematically illustrates an embodiment of an apparatus for generating an image for a microscope that can be used to implement the method. Both figures comprise information on the method to be performed and fig. 2 additionally comprises information on how the workload of the method may be distributed among different hardware components. Therefore, both figures will subsequently be described jointly, focusing on the disclosure of a specific figure where appropriate.

The method 100 for generating an image for a microscope comprises receiving 102 a first image 210 and receiving 104 a second image 220. The method further comprises generating 106 a processed second image 240, 214 based on the second image 220. The image 204 is generated 108 using the first image 210 and the processed second image 240, 214.

Processing a second image and combining the processed second image with an unprocessed first image received in parallel to the second image may allow to perform complicated processing on the second image. It can simultaneously be assured that an image from a microscope can also be provided if an image processing pipeline processing the second image fails by any means since then the first image is still available.

As illustrated in fig. 2, in an embodiment of an apparatus 200 to perform the method, different steps of the method may be distributed to different circuits to achieve a stable and fast system. In the embodiment of fig. 2, an input interface 202 receives the first image 210 and the second image 220. Processing circuitry 230 configured to generate the processed second image 240, 214 and to generate the image 204 using the first image 210 and the processed second image 240, 214 comprises at least two different circuits.

Application specific circuitry 250 is used to generate the image 204 using the first image 210 and the processed second image 240, 214. A graphics processing unit 260 is configured to contribute to the generation of the processed second image 240, 214.

Performing the image processing on a graphics processing unit 260 while using application specific circuitry 250 to generate the first image and the processed second image may assure both, high reliability and speed of the whole circuit due to the application-specific circuitry and flexibility and speed for various image processing pipelines or models using the GPU.

While the embodiments described herein mainly refer to images, further embodiments may likewise operate on a series of images, i.e. on a video stream. Embodiments using the described reliable image/video processing to generate images or video streams for microscopes may particularly benefit from the flexible and performant low latency image/video processing, allowing to provide a video stream based on sophisticated processing, yet with enhanced quality of the output video. For example, the second image 220 or a video stream comprising the second mage 220 may be processed using a trained network. In an output video stream comprising the image 204, for example, areas of interest can be detected and highlighted, and recommendations may be provided to a surgeon based on the analysis of the second image. Using and analyzing images of different (specral) content can result in the implementation of advanced features such as the creation of an enhanced depth of field, advanced color profiling or object detection. Such features require a significant amount of computational power and may not be possible to achieve with conventional solutions having only a single image processing pipeline.

To the contrary, the embodiments disclosed herein allow to combine sophisticated video processing (e.g. using AI and trained neural networks) and conventional video processing with minimum impact on the conventional video processing. For example, AI can help processing the video with more advanced algorithm, such as extended depth of filed, to provide surgeon a better surgical view. AI can analyse the video stream and provide real-time insights to the surgeon, such as highlighting critical areas of interest, detecting anomalies, and providing recommendations. This can help the surgeon make informed decisions quickly and accurately, leading to better surgical outcomes.

As illustrated in fig 2. The first image 210 and the processed second image 240, 214 may be combined using a mixer. The mixer may perform different methods to combine the images. For example, alpha blending may be used. This involves overlaying one image on top of another with a certain transparency level (alpha). The resulting image is a weighted combination of the pixel values from both images. Image Fusion may be used to combine images using wavelet transforms or pyramids to integrate details from multiple resolutions. Image Fusion may be effective for enhancing features in medical imaging or remote sensing. Principal Component Analysis may be performed to transform images into principal components, which can be combined to highlight different features. Overlay and masking may be performed. Directly placing one image on top of another is called overlay. This can be done with or without transparency. Masking uses a binary or grayscale mask to combine parts of two images. For example, the image of the ROI 270 may comprise pixels having a valuue between 0 to 1. The mixer can use a formular to merge them two together. The formular could based on the experiment. For example, one implementation could be:

$$\text{output\_pixel} = \text{generated\_pixel} * \text{ROI} + \text{orignal\_pixel} * (1\text{-ROI})\text{ange 0 to 1.}$$

This can be useful for highlighting regions of interest or combining segmented images. Color space conversion may be used as well, resulting in a false color image. Assigning different spectral bands to RGB channels so creates a composite image 204 that highlights specific features.

To make the system reliable, a reliability criterion for the processed second image 240, 214 can be determined and combining the processed second image 240, 214 and the first image 210 to generate the image 204 may only be performed if the reliability criterion fulfills a determined condition. Likewisem the image 204 may be based on only the first image 210 if the reliability criterion does not fulfil the determined condition. The combination of the first image 210 and the second processed image 240, 214 may also be generally understood to be sensor fusion integrating video streams from different sensors (e.g., near infrared or thermal sensors and visible light cameras) to provide comprehensive situational awareness.

The method and the apparatus may, for example, be used to accentuate an area of interest 270 identified in the processed second image 240, 214 is accentuated with-in the image 204.

To do the image processing based on the second image 220, a trained neural network may be used to generate the processed second image 240, 214. According to some embodiments, the second image 220 is down-sampled to a down-sampled second image 280 and the processing is performed on the down-sampled second image 280 to decrease latency. While the input images may have a higher resolution (4K), the second image may, for example, be down-sampled to a resolution of full HD (1920p) to increase processing speed and energy efficiency. A lower resolution may be sufficient to, for example, determine a region of interest or to determine different tissue types with sufficient spatial resolution for a surgeon. Other embodiments may, however, also process the original image with the high resolution.

In the event of down-sampling, the processing further comprises up-sampling the down-sampled representation of processed second image 290 in order to enable subsequent mixing with the first image 210 exhibiting a higher resolution.

As already indicated previously, the images combined may relate to different parts of the spectrum to perform sensor fusion or the like. In other words, the first image 210 can be associated to a first wavelength range and the second image 220 can be associated to a different second wavelength range.

Similarly to the second image 210, also a derivative of the first image may undergo processing before being combined with the image in further embodiments. For example, a representation of the first image 212 may be processed using a further trained neural network. The representation may, for example, be a copy of the first image 210 or a down-sampled version of the first image 210.

In summary, fig. 2 illustrates image fusion as an example for the concept proposed in this specification. The critical path is the conventional video processing pipeline 204 using the first image 210, which could provide a basic video output. AI processing in GPU 260 can be performed independent from the critical path and merged back to critical path 204 with the region of interest (ROI) mask using the mixer. Said architecture can assure that the critical path 204 is always working even the advanced feature encounters any problem. Doing so, the additional use of an AI platform has minimum impact to processing of the first image or of a first video stream. The concept may even serve to supplement an existing processing pipeline 204 for the first image 210 with sophisticated new functions without critically affecting the existing pipeline 204.

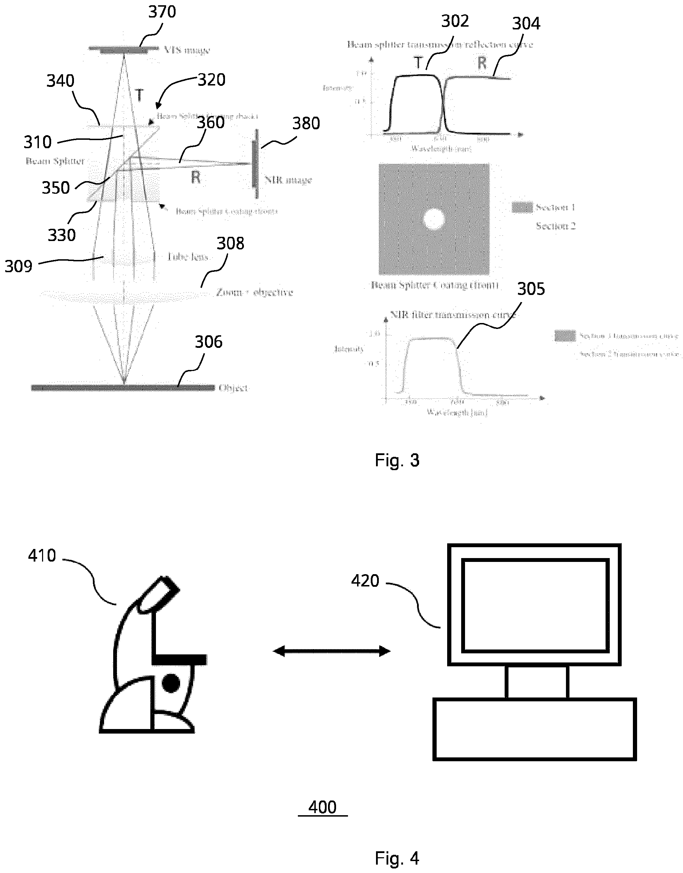

Fig. 3 illustrates an example for an optical assembly to determine images usable for the method of fig. 1 or the apparatus of fig 2. In particular, the optical assembly may be used within a microscope to generate images having a different spectral content.

Light originates from a specimen or object 306 and passes through the zoom and objective lens 308. This lens collects the light and directs it towards tube lens 309. The tube lens 309 further focuses the incoming light onto the beam splitter 320. The beam splitter 320 has wavelength sensitive coatings on its front face 330 and on its back face 340. The transmission characteristics of the wavelength sensitive coatings is given by graph 305. In summary, the wavelength sensitive coating filters out the visible part of the spectrum, i.e. only that visible part of the spectrum is transmitted. Other implementations, may, of course, also filter other parts of the spectrum. The wavelength sensitive coating on the front face 330 has a circular opening around a main optical axis 310, allowing to enter light having the full spectral content into the beam splitter 320 within this area.

Within the beam splitter 320, the light is divided into two paths by beam splitting element 350. The first path passes straight through the beam splitter 320 and continues along the primary optical axis 310. The second path is light reflected at the beam splitting element 350 and redirected along a secondary optical axis 360.

By the beam splitter 320, the incident light from the specimen is so separated into a first wavelength range 302 corresponding to the visible spectrum without infrared. The first wavelength range 302 is output along the main optical axis 310. A second wavelength range having essentially all spectral components is output along the secondary optical axis 360. At the same time, the aperture of the second spectral component (NIR) is reduced as compared to the aperture for the first spectral component (visible light), resulting in a greater focal depth (depth of field - DOF) of the second spectral component within the specimen 306.

The transmitted light proceeds along the primary optical axis 310 and is detected by a first imaging sensor 370 sensitive to the first wavelength range. This detector or image sensor 370 captures the visible (VIS) light component. The reflected light travels along the secondary optical axis 360 and is detected by a second imaging sensor 380 sensitive to a second wavelength range. In the embodiment illustrated in Fig. 3, the second imaging sensor 380 is a NIR image detector and captures the near-infrared (NIR) light component within the reflected light. However, the aperture of the system is reduced for the near-infrared light as compared to the aperture of the visible light component because of the coating of the front face 330.

In summary, the objective lens 310 collects light from the object 306 and directs it towards the tube lens 309. The tube lens 309 focuses this light onto the beam splitter 320. The beam splitter then splits the light into two paths, the transmitted light, which is detected by the VIS image detector 370 for visible light imaging, and the reflected light, which is detected by the NIR image detector 380 for near-infrared imaging. This setup allows for simultaneous imaging in both the visible and near-infrared wavelength ranges.

As compared to conventional multi-sensor microscopes, the embodiment of fig. 3 allows to capture different depth of field (DOF) images for different sensors since different light paths do no longer shared the same aperture. Capturing images in different DOF could enable the microscope to perform a sophisticated postprocessing algorithm to enlarge the DOF of the whole microscope when combining the images gathered by the first imaging sensor 370 and the second imaging sensor 380.

According to the embodiment, near infrared light is included in the optical system and the shape of a coating of the beam-splitter is chosen such as to allow the visible light (VIS) to pass normally while cutting off some part of NIR light to decrease the aperture of the entire system for the NIR light. NIR light then has a larger DOF. Post-processing may be desirable to eliminate vignetting effects that may be caused by the coating. It is worth noting that the embodiment of fig. 3 does not limit the VIS light intensity.

A larger DOF in microsurgery results in a better sense of distance between tools and the surgical spot. A wrong sense of the distance might lead to a surgical accident. Conventionally, the way to enlarge the DOF is to reduce the aperture size of the entire system. However, smaller aperture size reduces the definition of the image and the quality of the visible image which causes a decreased surgery experience. With the embodiment of fig. 3, the VIS light path with larger aperture size guarantees high definition of the image while the NIR light provide the larger DOF with smaller aperture. By postprocessing one or both of these two images, one can get a larger DOF with a high definition image.

As compared to conventional approaches, the complex design of a diffraction optical element can be avoided since no diffraction filters need to be implemented on the aperture plane. Wave-front coding requires to copute the complete camera model and calculate the diffraction parameters of the optical element. However, the parameters from the models are usually not accurate since the error accumulation in the final implementation is hard to model. This leads to the inaccurate design of the diffractive optical element which will cause more artifact in the postprocessing. As a conventional alternative, color coding would allow different color of light to pass different sizes of aperture. However, the total amount of light reduces when passing color coded optical elements which reduces the image quality as compared to the proposed embodiments.

Fig. 4 schematically illustrates an example for a microscopy system 400. The system comprises a microscope 410 configured to take a first image corresponding to a first wavelength range 302 and a second image corresponding to a second wavelength range. The microscope may, for example, implement the optics illustrated in fig. 3 to take the images. The microscopy system 400 further includes an apparatus 420 to analyze the images as illustrated in fig. 2. The apparatus can be configured to perform image processing on only the images corresponding to the first wavelength range 302, on only the images corresponding to a second wavelength range or on both images. Depending on the implementation, the apparatus 420 can be integral part of the microscope or it can be a separate component coupled to the microscope 410 so as to receive the images generated by the microscope.

In other words, some embodiments relate to a microscope comprising a system as described in connection with one or more of the Figs. 1 to 3. Alternatively, a microscope may be part of or connected to a system as described in connection with one or more of the Figs. 1 to 3.

Fig. 4 shows a schematic illustration of a system 400 configured to perform a method described herein. The system 400 comprises a microscope 410 and a computer system 420. The microscope 400 is configured to take images and is connected to the computer system 420. The computer system 420 is configured to execute at least a part of a method described herein. The computer system may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera or an illumination unit, etc. of the microscope 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

Embodiments may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e. each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g. a classification algorithm, a regression algorithm or a similarity learning algorithm. Classification algorithms may be used when the outputs are restricted to a limited set of values (categorical variables), i.e. the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters.

Reinforcement learning is a third group of machine-learning algorithms. In other words, reinforcement learning may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e. outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g. a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g. based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g. of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e. support vector networks) are supervised learning models with associated learning algorithms that may be used to analyze data (e.g. in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

**Claims**

1. A method for generating an image (100) for a microscope, comprising:

   receiving (102) a first image (210);
   receiving (104) a second image (220);
   generating (106) a processed second image (240, 214) based on the second image (220); and
   generating the image (204) using the first image (210) and the processed second image (240, 214).

2. The method of claim 1, further comprising:

   determining a reliability criterion for the processed second image (240, 214); and
   combining the processed second image (240, 214) and the first image (210) to generate the im-age (204) if the reliability criterion fulfills a determined condition.

3. The method of claim 2, further comprising:
   generating the image (204) based on only the first image (210) if the reliability criterion does not fulfil the determined condition.

4. The method of any of claims 1 to 3, wherein the image (204) is generated such that an area of interest (270) identified in the processed second image (240, 214) is accentuated with-in the image (204).

5. The method of any of claims 1 to 4, further comprising:
   down-sampling the second image (220).

6. The method of claim 5, further comprising:
   processing the second image (220) or the down-sampled second image (280) using a trained neural network to generate the processed second image (240, 214) or a down-sampled representation (290) of the processed second image.

7. The method of claim 6, further comprising: up-sampling the down-sampled representation of processed second image (290).

8. The method of claim 7, wherein the neural network is trained to determine at least one item of the group consisting of an area of interest within the processed second image (240, 214), an anomaly, and a recommendation.

9. The method of any one of claims 1 to 8, wherein the first image (210) is associated to a first wavelength range and wherein the second image (220) is associated to a different second wavelength range.

10. The method of any of claims 1 to 9, further comprising:
    processing a representation of the first image (212) using a further trained neural network.

11. The method of claim 10, wherein the image is generated further using the processed representation of the first image (214).

12. An apparatus (200) for generating an image (204) for a microscope, comprising:

an input interface (202) configured to receive a first image (210) and a second image (220);
processing circuitry (230) configured to:

generate a processed second image (240, 214) based on the second image (220); and
generate the image (204) using the first image (210) and the processed second image (240, 214).

13. The apparatus of claim 11, the processing circuitry (230) comprising:

application specific circuitry (250) configured to generate the image 204 using the first image (210) and the processed second image (240, 214); and
a graphics processing unit (260) configured to contribute to the generation of the processed second image (240, 214).

14. A Computer program with a program code for performing the method according to any of claims 1 to 11 when the computer program is run on a processor.

15. A microscopy system (400) comprising:

a microscope (300) configured to take a first image corresponding to a first wavelength range (302) and a second image corresponding to a second wavelength range (304); and
an apparatus (200) according to claim 12 or 13.

16. The microscopy system (400) according to claim 15, the microscope (300) comprising:

a lens system along a main optical axis (310) to image a specimen; and
a beam splitter (320) in the main optical axis (310) of the microscope to separate the first wavelength range (302) from the second wavelength range (304), the beam splitter (320) comprising a front face (330), a back face (340) and a beam splitting element (350) between the front face (330) and the back face (340), the beam splitting element (350) directing a part of the incident light intensity into the direction of a secondary optical axis (360) different than the main optical axis (310);
wherein the front face (330) comprises a wavelength sensitive coating, the coating having a transmission characteristic blocking the second wavelength range (304).

17. The microscopy system according to claim 16, wherein the wavelength sensitive coating has an opening around the main optical axis (310).

18. The microscopy system according to any of claims 15 to 17, further comprising the wavelength sensitive coating on the back face (340).

19. The microscopy system according to any of claims 15 to 18, the microscope system further comprising a first imaging sensor (370) sensitive to the first wavelength range (302) along the main optical axis (310); and
a second imaging sensor (380) sensitive to the second wavelength range (304) along the secondary optical axis (360).

```
┌─────────────────────────────┐
│                             │
│    receive a first image    │  ⌇102
│                             │
└─────────────────────────────┘
              │
┌─────────────────────────────┐
│                             │
│   receive a second image    │  ⌇104
│                             │
└─────────────────────────────┘
              │
┌─────────────────────────────┐
│     generate a processed    │  ⌇106
│        second image         │
│                             │
└─────────────────────────────┘
              │
┌─────────────────────────────┐
│ Generating the image using the first │  ⌇108
│   image and the processed   │
│        second image         │
└─────────────────────────────┘
```

Fig.1

Fig.2

Fig. 3

400

Fig. 4

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/024341 A1 (ROMANOWSKI MAREK [US] ET AL) 25 January 2018 (2018-01-25) * paragraphs [0029], [0032], [0033], [0039], [0066]; claims 1, 17; figures 1A, 1B, 3 * | 1,4-15 | INV. G02B21/36 G06T5/50 G02B21/00 |
| X | US 2022/318969 A1 (SCHERER DOMINIK [DE] ET AL) 6 October 2022 (2022-10-06) | 1-3,19 | ADD. G02B27/14 |
| A | * paragraphs [0050] - [0053]; claim 1; figure 1 * | 4-15 | |
| X | US 2017/237958 A1 (THEMELIS GEORGE [DE]) 17 August 2017 (2017-08-17) | 1 | |
| A | * claim 4; figure 1 * | 2-15,19 | |
| X | US 2021/176443 A1 (ESLAMI ABOUZAR [DE] ET AL) 10 June 2021 (2021-06-10) | 1 | |
| A | * paragraphs [0064] - [0066]; claims 19, 28; figure 2 * | 2-15,19 | |
| A | US 2021/356729 A1 (AMTHOR MANUEL [DE] ET AL) 18 November 2021 (2021-11-18) * paragraph [0084] * | 10,11 | TECHNICAL FIELDS SEARCHED (IPC) |
| A | CN 116 893 501 A (VIEWORKS CO LTD) 17 October 2023 (2023-10-17) * the whole document * | 1-15,19 | G02B G06T |
| A | US 10 255 693 B2 (TECHCYTE INC [US]) 9 April 2019 (2019-04-09) * the whole document * | 1-15,19 | |
| A | WO 2023/156417 A1 (LEICA INSTR SINGAPORE PTE LTD [SG]; LEICA MICROSYSTEMS [DE]) 24 August 2023 (2023-08-24) * the whole document * | 1-15,19 | |

-/--

The present search report has been drawn up for all claims

| Place of search | Date of completion of the search | Examiner |
|---|---|---|
| Munich | 18 February 2025 | Toccafondo, Iacopo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 24 18 5575

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 888 458 B2 (NOVARTIS AG [CH]; ALCON INC) 12 January 2021 (2021-01-12) * the whole document * ----- | 16-18 | |
| A | CN 112 368 539 B (PRECITEC OPTRONIK GMBH) 16 May 2023 (2023-05-16) * the whole document * ----- | 16-18 | |

**TECHNICAL FIELDS
SEARCHED     (IPC)**

The present search report has been drawn up for all claims

| Place of search | Date of completion of the search | Examiner |
|---|---|---|
| Munich | 18 February 2025 | Toccafondo, Iacopo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)

Europäisches
Patentamt

European
Patent Office

Office européen
des brevets

**Application Number**

EP 24 18 5575

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

**EP 24 18 5575**

The Search Division considers that the present European patent application does not comply with the requirements of unity of invention and relates to several inventions or groups of inventions, namely:

    **1. claims: 1-15, 19**

        A method for generating an image for a microscope, comprising:
receiving a first image;
receiving a second image;
generating a processed second image based on the second image; and
generating the image using the first image and the processed second image;
determining a reliability criterion for the processed second image; and combining the processed second image and the first image to generate the image if the reliability criterion fulfils a determined condition.

            ---

    **2. claims: 16-18**

        A microscope comprising:
an apparatus for generating an image for a microscope, comprising:
an input interface configured to receive a first image and a second image;
processing circuitry configured to:
generate a processed second image based on the second image; and
generate the image using the first image and the processed second image;
and further comprising:
a lens system along a main optical axis to image a specimen; and
a beam splitter in the main optical axis of the microscope to separate the first wavelength range from the second wavelength range, the beam splitter comprising a front face, a back face and a beam splitting element between the front face and the back face, the beam splitting element directing a part of the incident light intensity into the direction of a secondary optical axis different than the main optical axis;
wherein the front face comprises a wavelength sensitive coating, the coating having a transmission characteristic blocking the second wavelength range.

            ---

## ANNEX TO THE EUROPEAN SEARCH REPORT
## ON EUROPEAN PATENT APPLICATION NO.

EP 24 18 5575

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2025

| Patent document cited in search report | | Publication date | Patent family member(s) | | Publication date |
|---|---|---|---|---|---|
| US 2018024341 | A1 | 25-01-2018 | US | 2018024341 A1 | 25-01-2018 |
| | | | WO | 2016130424 A1 | 18-08-2016 |
| US 2022318969 | A1 | 06-10-2022 | DE | 102021203187 B3 | 24-02-2022 |
| | | | US | 2022318969 A1 | 06-10-2022 |
| US 2017237958 | A1 | 17-08-2017 | CN | 107137053 A | 08-09-2017 |
| | | | EP | 3205254 A1 | 16-08-2017 |
| | | | JP | 6456416 B2 | 23-01-2019 |
| | | | JP | 2017148503 A | 31-08-2017 |
| | | | US | 2017237958 A1 | 17-08-2017 |
| | | | US | 2021021795 A1 | 21-01-2021 |
| US 2021176443 | A1 | 10-06-2021 | DE | 102019133174 A1 | 10-06-2021 |
| | | | US | 2021176443 A1 | 10-06-2021 |
| US 2021356729 | A1 | 18-11-2021 | CN | 113674183 A | 19-11-2021 |
| | | | DE | 102020113313 A1 | 18-11-2021 |
| | | | US | 2021356729 A1 | 18-11-2021 |
| CN 116893501 | A | 17-10-2023 | CN | 116893501 A | 17-10-2023 |
| | | | EP | 4258038 A1 | 11-10-2023 |
| | | | JP | 2023153767 A | 18-10-2023 |
| | | | KR | 20230143408 A | 12-10-2023 |
| | | | US | 2023314785 A1 | 05-10-2023 |
| US 10255693 | B2 | 09-04-2019 | NONE | | |
| WO 2023156417 | A1 | 24-08-2023 | EP | 4479948 A1 | 25-12-2024 |
| | | | WO | 2023156417 A1 | 24-08-2023 |
| US 10888458 | B2 | 12-01-2021 | AU | 2018384025 A1 | 23-04-2020 |
| | | | CA | 3079936 A1 | 20-06-2019 |
| | | | CN | 111465343 A | 28-07-2020 |
| | | | CN | 116671862 A | 01-09-2023 |
| | | | EP | 3678531 A1 | 15-07-2020 |
| | | | ES | 2934374 T3 | 21-02-2023 |
| | | | JP | 7293227 B2 | 19-06-2023 |
| | | | JP | 2021505284 A | 18-02-2021 |
| | | | US | 2019175402 A1 | 13-06-2019 |
| | | | WO | 2019116165 A1 | 20-06-2019 |
| CN 112368539 | B | 16-05-2023 | CN | 112368539 A | 12-02-2021 |
| | | | EP | 3811025 A1 | 28-04-2021 |
| | | | JP | 7393364 B2 | 06-12-2023 |
| | | | JP | 2021529941 A | 04-11-2021 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 18 5575

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2025

| Patent document cited in search report | Publication date | Patent family member(s) | Publication date |
|---|---|---|---|
| | | KR 20210021972 A | 02-03-2021 |
| | | TW 202014671 A | 16-04-2020 |
| | | WO 2019243008 A1 | 26-12-2019 |

EPO FORM P0459

For more details about this annex : see Official Journal of the European Patent Office, No. 12/82

page 2 of 2